# EUROPEAN PATENT SPECIFICATION

(11) **EP 1 764 888 B1**
(45) Date of publication and mention of the grant of the patent: **15.01.2014**
(21) Application number: 05380202.1
(22) Date of filing: 16.09.2005
(51) Int. Cl.: H02B 7/08

(54) **Electrical transformer centre**
Elektrische Unterstation
Sous-station électrique

(43) Date of publication of application: 21.03.2007
(73) Proprietor: ORMAZABAL Y CIA, S.L.U., 48140 Igorre Vizcaya (ES)
(72) Inventor: Sabas Fernandez, Jose Luis, 48140 Igorre (Vizcaya) (ES); Zautua Bilbao, Igor, 48140 Igorre (Vizcaya) (ES)
(74) Representative: Carpintero Lopez, Francisco

(56) References cited:
- EP-A- 0 499 592
- WO-A-2004/084368
- DE-A1- 2 158 520
- DE-B- 1 165 708

## Description

### TECHNICAL FIELD OF THE INVENTION

The invention lies in the field of electrical transformer centres.

### BACKGROUND OF THE INVENTION

Electrical transformer centres are meant to house electrical apparatus such as transformers, medium-voltage cells incorporating electrical and electronic equipment used in electrical power distribution installations for operation and/or protection of the electrical grid, low-voltage boards which after the power is transformed to the low-voltage range allow to distribute electrical power to the various consumers using operation and/or protection equipment, etc. According to their location, they may be either on the surface or underground, underground centres improving the appearance of their surroundings while allowing to free urban space.

Underground transformer centres are generally constituted by a cabin of suitable dimensions, which may be made by civil work or prefabricated, of concrete or other materials and placed underground, inside which are installed the various electrical devices that constitute the electrical installation of the centre (transformer, medium-voltage cells, low-voltage board, etc.). This cabin is closed on the top by a cover or roof that constitutes a surface that one can pass over and which is sealed to ensure a proper protection from water and humidity. The cover usually includes personnel access lids and lids for introducing / extracting the medium and low voltage electrical equipment. Additionally, disposed above the cover (or as an extension thereof) are the devices that allow to ventilate the transformer centre. In this sense can be cited Spanish patent applications ES-A-2157770 and ES-A-2181581 and European Patent application with publ. no. EP-A-0499592, which describe underground transformer centres of these characteristics.

Document DE 1 165 708 discloses a device according to the preamble of claim 1.

In underground transformer centres, in order to perform the maintenance and operation tasks of the electrical devices housed in them, such as transformers, medium-voltage cells, low-voltage boards etc. and/or to monitor auxiliary control and/or communications equipment that allow to record the state of each electrical device of the installation, to program action sequences (such as automatic line transfers to minimise power cuts), etc. it is necessary to access the interior of the centre. In this sense, in underground transformer centres workers must access the underground part, generally using a personnel access located on the cover. Access to the interior of the centre is generally uncomfortable due to the small dimensions of said accesses and to the need to travel up and down stairs. Likewise, the need to open the personnel access every time maintenance and/or supervision tasks are performed requires cleaning dirt from the frame of said access, which may affect its water-tightness, and increases the risk of breaking the seal that ensures the water-tightness of the access.

On another hand, the transformer and the low-voltage board are the devices which release the most heat inside transformation centres, so that underground transformer centres must include devices that allow to ventilate the transformer centre which may consist of turrets placed on the cover that allow a vertical ventilation, or vents on the sides of the transformer centre that allow horizontal ventilation. In this sense, ventilation of underground transformer centre has the drawback that, depending on the equipment installed in the transformer centre and the heat generated by them, a great number of ventilation devices are required for a proper cooling, increasing the cost of the installation and requiring enough space to install said devices.

One characteristic of underground transformer centres is that they must support a possible transit of vehicles. This requires covers to have structural characteristics able to withstand such mechanical demands. This problem has been solved traditionally by including a metal frame welded to the cover bars, so that the load is distributed throughout the entire cover reinforcement structure. Covers made in this manner are slow and therefore expensive to manufacture.

The cover of underground transformer centres can be part of the buried body and have one or several lids, or it can be independent of the buried body and have one or several lids. As the cover of these centres is also buried, except on their top face, in case of a possible break or crack of the cover or a lid it is necessary to replace them to prevent, for example, a complete breakage when a vehicle passes over it. The replacement of the cover or lid will involve damaging the surrounding urban installations in order to extract it.

### DESCRIPTION OF THE INVENTION

The invention relates to an electrical transformer centre according to claim 1.

According to the invention, at least one part of the electrical equipment of the transformer centre is housed in the external part or parts.

This provides several advantages:
Firstly, it allows reducing the number of elements that must be housed in the underground part, allowing to reduce its dimensions, which can lower the installation costs.
Secondly, by placing part of the electrical equipment out of the underground part the access of workers to said electrical equipment is simplified, as these can be accessed without entering the underground part, reducing the work required and the number of times that the access gates or doors to the underground part must be opened.

In addition, it is possible to install in the external part indicators or signs informing of events related to the transformer centre.

For example, the part of the electrical equipment housed in said external part can comprise the low-voltage board. This part must be accessed by workers quite frequently, and in addition produces heat, so that it can be especially convenient to take it out of the underground part and place it in the external part.

The part of the electrical equipment housed in the external part can also (or alternatively) comprise auxiliary control and/or communication equipment. However, the transformer as such is located in the underground part.

The external part (or parts) can for example be located on the cover of the underground part. In this way it is not necessary to have ducts or the like between the underground body and the external part, reducing the costs and helping to improve the ventilation, while reducing the possible sources of problems related to lack of water-tightness and/or electrical insulation.

The external part is configured as a cabinet with a roof, walls and one or more doors providing access to the electrical equipment housed in the external part; these doors can also be used to place publicity. This configuration also simplifies access to the part of the electrical equipment.

The external part is configured as a single-piece module, which can simplify the installation of the external part over an underground part (such as with an underground part that is prefabricated and/or preinstalled in the ground).

The cover can have at least one through orifice above which the corresponding external part will be placed, so that at least one orifice allows passage of cables and air and gas flow from the underground part to the external part. The external part can be inserted in a groove around the orifice made in the cover of the underground part. Alternatively, the cover can comprise a lip around the orifice; in this case, the external part can be placed over the cover such that the lip is inserted in a groove of the bottom of the external part, or so that the lip is placed inside the walls of the external part.

The external part can be provided with at least one ventilation grille.

The external part can comprise at least one compartment, such as for example two compartments separated by a wall, so that the first of said compartments houses part of the electrical equipment and the second of said compartments houses another part of the electrical equipment.

The cover can be provided with at least one ventilation turret for inlet of air to the underground part, and/or the underground body can be provided with at least one vent in at least one of the walls or the cover of the underground body.

The transformer centre is additionally provided with an insulating or insulated equipotential platform that can be fixed to the ground or able to swivel so that it can be placed in a horizontal position that will support a worker who needs to access the inside of the external part, such as to manipulate some of the electrical equipment housed in it.

The cover can be part of the underground body or be independent of it; in the latter case it can consist of one or more plates and be fitted on the underground body without projecting laterally from it. For example, the cover can be inserted in a recessed area of the walls of the underground body. In this way, it can be easier to replace part of the cover if it has been damaged without affecting the surface of its surrounding land (so that it is not necessary to damage the surface structures of the corresponding land).

### DESCRIPTION OF THE FIGURES

To complete the description and in order to aid a better understanding of the characteristics of the invention, according to some examples of preferred embodiments, a set of figures is accompanied as an integral part of the description where, for purposes of illustration and in a non-limiting sense, the following is represented:
Figure 1.- Represents a schematic perspective view of the transformer centre according to a preferred embodiment of the invention, with the external part (1) in the form of a cabinet mounted above a plate (8) of the cover (14) of the underground part, and with a vertical ventilation turret (9) for air inlet.
Figure 2.- Represents a rear view of figure 1, showing the external part (1) that comprises a ventilation grille (13) for outlet of the cooling air.
Figure 3.- Represents a view of the transformer centre according to an alternative embodiment of the invention, in which the plate (8) has a lip (16) around the orifice (15), the outer part being mounted around said lip (16).
Figure 4.- Represents a schematic partially-sectioned perspective view of the transformer centre according to an alternative embodiment of the invention; it can be seen how the external part (1) fits in the orifice (15) of the plate (8).
Figure 5.- Represents a schematic vertical cross-section view of the transformer centre according to an alternative embodiment of the invention, with an equipotential platform (26) and an external part (1) in the form of a cabinet placed above two orifices (27) and (28), to allow passage of cables and air flow, as well as to evacuate gases.
Figure 6.- Represents a schematic perspective view of the transformer centre according to a possible embodiment of the invention, with a horizontal vent (24) for the inlet of cooling air.
Figure 7.- Represents an inset (in vertical cross-section) of the transformer centre inside the ground (25) and the closure of a plate (7), placed above the transformer (21), against another plate (8) and against the walls of the underground body (12).

### PREFERRED EMBODIMENT OF THE INVENTION

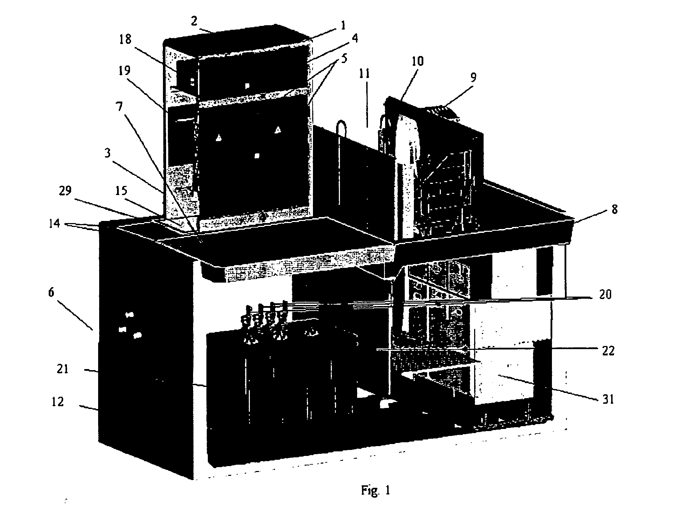

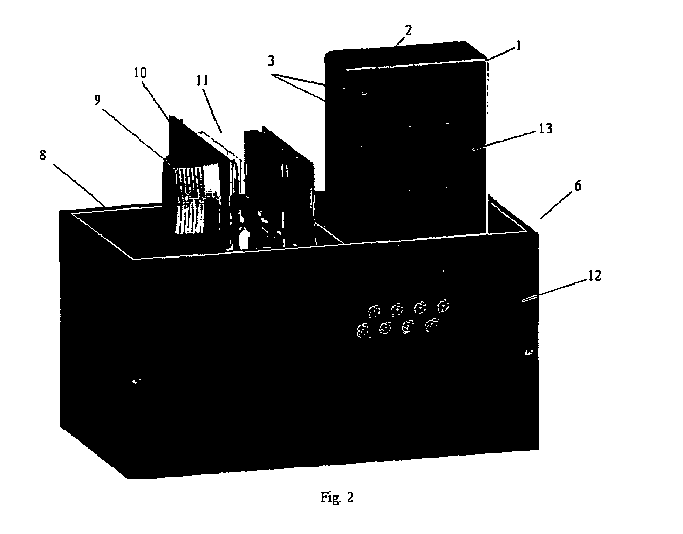

Figures 1 and 2 show a transformer centre having an underground part (6) that comprises an underground body (12) prefabricated as a single piece of concrete, polyester or another material, a cover (14) made of concrete, polyester or another material, and an external part (1) in the form of a prefabricated cabinet of concrete, polyester or another material. This cabinet is a single-piece element placed on the cover (14), such that the cabinet (1) houses the low-voltage board (19) corresponding to the transformer centre, the cabinet (1) also allowing to ventilate the transformer centre, using a single element for the purposes of housing the low-voltage board and ventilation. In this manner, as part of the electrical apparatuses have been extracted to the cabinet (1), it is possible to reduce the dimensions of the underground body (12). This allows reducing the dimensions of the ground digging site required to bury said transformer centre, as well as the corresponding execution costs.

The cover (14), as shown in figures 1 and 2, is formed by two independent plates (7) and (8) (the latter L-shaped), so that the cabinet (1) is mounted on the L-shaped plate (8). The cabinet (1) is constituted by the walls (3) and the roof (2), and the low-voltage board (19) is located inside it.

In addition, according to this embodiment of the invention, a cabinet (1) has been chosen that is divided into two compartments separated by a horizontal wall (17). Disposed on the horizontal all are auxiliary control and/or communication equipment (18) that form part of the electrical/electronic equipment of the transformer centre that allow to automate the installation (both locally and remotely), protections, auxiliary services, public lighting outlets, etc. The low-voltage board (19) is installed in the lower compartment of the cabinet (1). Each of these compartments has its own doors (4, 5), so that if it is necessary to perform maintenance tasks on the low-voltage board (19) or to supervise the state of the electrical apparatuses of the installation or to receive/transmit operation commands through the auxiliary control and/or communication equipment (18), the operator does not have to enter the underground part (6). Thus the invention simplifies the access to the operation, maintenance and/or supervision of the installation. Likewise, the number of times that the access (11) to the underground part provided for the workers is reduced, thereby preventing or reducing the risk of damaging the seal of said access (11).

The cabinet that constitutes the external part (1), as shown in figures 1 and 2, is disposed over the plate (8) and specifically over a through orifice (15) of said plate (15). Around said orifice (15) is a peripheral groove (29) in which are inserted the walls of the cabinet (1); gaskets assure a watertight union of the walls (3) of the cabinet (1) and the plate (8).

In addition, the walls (3) of the cabinet (1) are bolted to the plate (8) of the cover to ensure their stability. The orifice (15) allows both passage of the cables from the low-voltage terminals (20) of the transformer (21) to the low-voltage board (19) and from the low-voltage board (19) to the corresponding loads, as well as passage of the cables to the auxiliary control and/or communication equipment (18). In turn, said orifice (15) and the grille (13) disposed on one of the walls (3) of the cabinet (1) allow the entry of hot air from the transformer centre; the entry of cold air to the underground part (6) of the transformer centre is enabled by a turret (9) disposed over the door (10) for access (11) to the underground part provided for the workers. This creates an air flow that a deflector (22) forces to pass under the transformer (21) and continues to the outlet (13) passing through the aforementioned orifice (15), using the cabinet (1) as a hot air outlet and thereby reducing the number of ventilation turrets or horizontal vents required by the transformer centre.

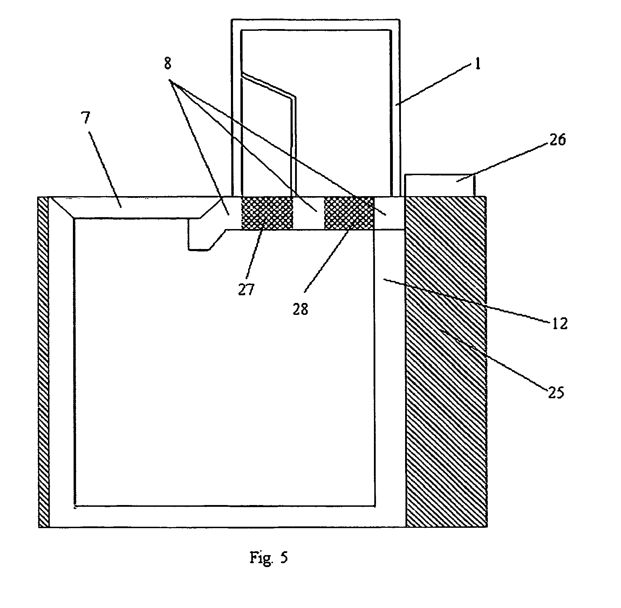

As shown in figure 5, the underground body (12) of the underground part (6) of the transformer centre is inside the ground (25), while the plates (7) and (8) that form the cover (14) are in contact only with the underground body (12), so that if the cover (14) is broken or damaged it can be replaced without damaging the urbanisation surrounding the underground body (12). The L-shaped plate (8) rests on the walls of the underground body (12), while the rectangular plate (7) placed over the transformer (21) rests on both the walls of the underground body (12) and on the L-shaped plate (8). The water-tightness of said cover (14) is ensured by gaskets.

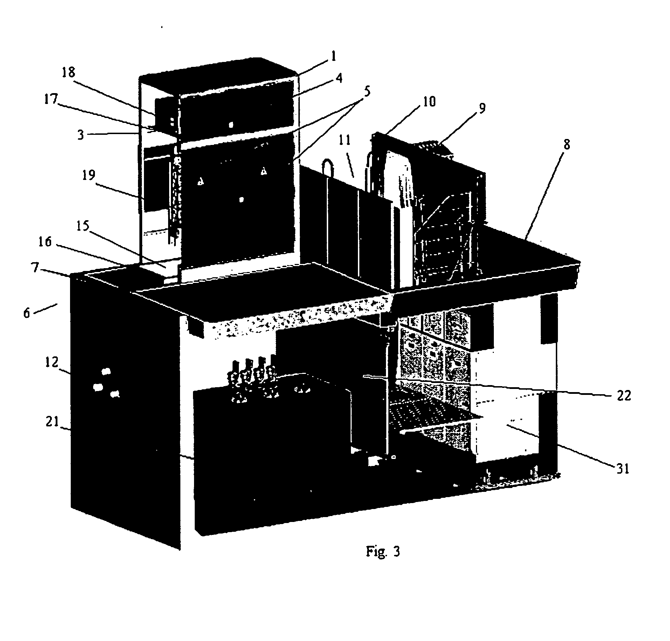

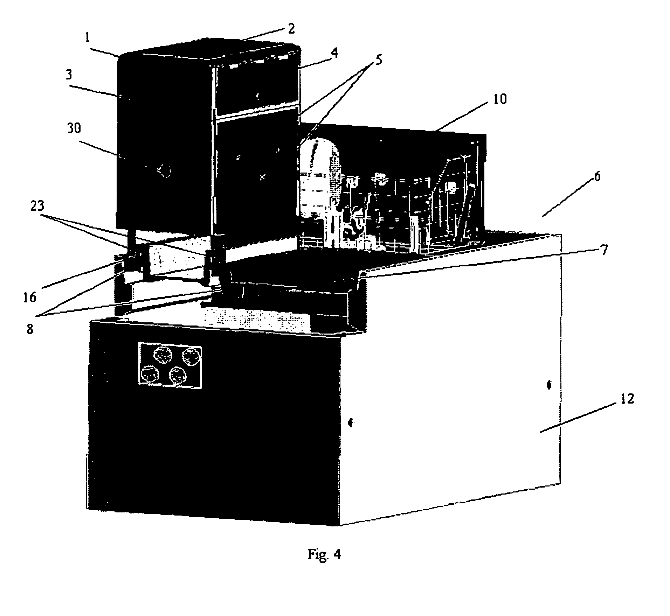

Figures 3 and 4 show two variations in which the cover has a lip (16) around the orifice (15) of the cover; this lip fits in a groove (23) on the bottom of the external part (1) in the form of a cabinet as shown in figure 4, and the external part (1) is mounted around said lip as shown in figure 3.

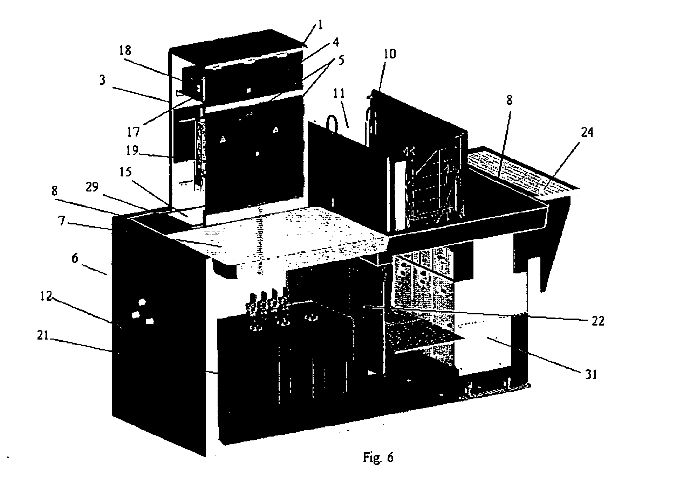

Figure 6 shows an alternative embodiment with a horizontal vent (24) on one of the walls of the underground body.

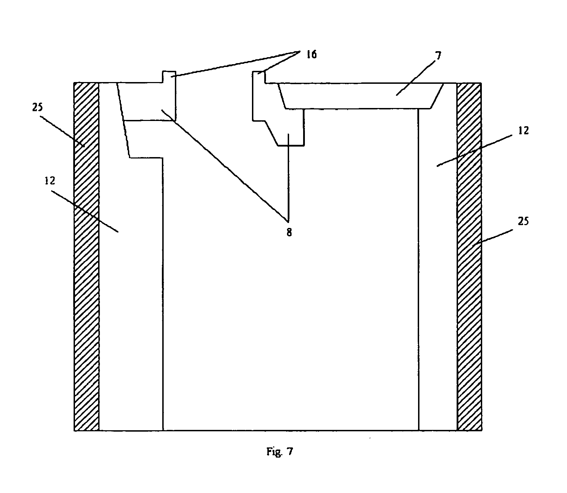

As mentioned above, figure 7 shows the transformer centre inside the ground (25) with the rectangular plate (7) (above the transformer, not shown in the figure) resting on the L-shaped plate (8) and on the walls of the underground body (12).

The numerical references used in this text correspond to the following elements:
1 - external part
2 - roof of the external part
3 - walls of the external part
4 - door on the external part for access to the compartment of the auxiliary control and/or communications units
5 - doors on the external part for access to the compartment of the low-voltage board 19
6 - underground part comprising a transformer or equivalent
7 - rectangular plate constituting part of the cover 14
8 - L-shaped plate constituting another part of the cover 14
9 - vertical turret for air intake
10 - access door
11 - worker access to the underground part
12 - body of the underground part
13 - ventilation grille
14 - cover of the underground part
15 - orifice in plate 8
16 - lip around the orifice 15
17 - metal wall dividing the external part into to compartments
18 - auxiliary control and/or communication units
19 - low-voltage board
20 - low-voltage terminals
21 - transformer or transformer unit
22 - deflector
23 - peripheral groove on the bottom of the external part
24 - horizontal vent for cooling air intake
25 - ground in which the underground part is buried
26 - insulating or insulated equipotential platform
27, 28 - two orifices 27 and 28 in plate 8
29 - peripheral groove
30 - through orifice made in one of the walls of the external part for passage of cables for auxiliary services
31 - medium-voltage cells

In this text the term "comprise" and its derivations (such as "comprising", etc.) must not be understood in an excluding sense, this is, they do not exclude the possibility that what is described includes other elements, steps, etc.

Moreover, the invention is not limited to the specific embodiments described herein, but also extends to the variations that may be executed by an average expert in the field (such as regarding the choice of materials, dimensions, components, configuration, disposition of the medium-voltage cells on the external cabinet, etc.) as can be inferred from the claims.

## Claims

1. Electrical transformer centre comprising:
an underground part (6) that comprises an underground body (12) substantially buried in the ground (25) and, at least, one transformer unit (21) housed in said underground body, said underground body having a cover (14);
a plurality of electrical equipment (18, 19) which, together with the transformer (21), constitute an electrical installation of the transformer centre; and
at least one external part (1), placed such that it extends above the surface of the ground (25), the external part (1) being communicated with an internal part of the underground body;
**characterised in that** the, at least, one external part (1) is configured as a single-piece module as a cabinet comprising a roof (2), walls (3) and doors (4, 5) for access to the part of the electrical equipment (18, 19) and wherein said, at least, one external part (1) is located on the cover (14) of the underground part (6) such that it constitutes a ventilation chimney for the underground part (6), allowing the exit of air from said underground part (6) and wherein at least one part of the electrical equipment (18, 19, 31) is housed in said, at least one, external part (1), so that the access of the workers to said electrical equipment (18,19,31) housed in the external part (1) is simplified and wherein an insulating or insulated equipotential platform (26) is provided which swivel so that it can adopt a horizontal position in which it can support a worker who wishes to access the equipment inside the external part (1).

2. Transformer centre according to claim 1, in which said part of the electrical equipment that is housed in said external part (1) comprises a low-voltage board (19).

3. Transformer centre according to any of the previous claims, in which said part of the electrical equipment that is housed in said external part (1) comprises auxiliary control and/or communication equipment (18).

4. Transformer centre according to any of the previous claims, in which said part of the electrical equipment that is housed in said external part (1) comprises medium-voltage cells (31).

5. Transformer centre according to any of the previous claims, in which the external part (1) is provided with at least one ventilation grille (13).

6. Transformer centre according to any of the previous claims, in which the cover (14) has at least one through orifice (15; 27, 28) above which the external part (1) is placed so that the, at least one, orifice (15, 27, 28) allows the passage of cables and the flow of air and gases between the underground part (6) and the external part (1).

7. Transformer centre according to claim 6, in which the external part (1) fits in a groove (29) around the orifice (15; 27, 28) in the cover (14) of the underground part (6).

8. Transformer centre according to claim 6, in which the cover (14) comprises a lip (16) around the orifice (15; 27, 28).

9. Transformer centre according to claim 8, in which the external part (1) is located above the cover so that the lip (16) fits in a groove (23) made in the bottom of the external part (1).

10. Transformer centre according to any of the previous claims, in which the external part (1) comprises external signs indicating incidents related to the transformer centre.

11. Transformer centre according to any of the previous claims, in which the external part comprises at least one compartment.

12. Transformer centre according to claim 11, in which the external part (1) comprises two compartments separated by a wall (17), so that a first of said compartments houses one part (19) of the electrical equipment and a second of said compartment houses the auxiliary equipment (18).

13. Transformer centre according to any of the previous claims, in which the cover is provided with at least one ventilation turret (9) for intake of air to the underground part (6).

14. Transformer centre according to any of the previous claims, in which the underground body (12) is provided with at least one vent (24), in at least one of the walls or cover of the underground body (12).

15. Transformer centre according to any of the previous claims, in which the cover (14) fits in the underground body (12) without extending laterally from said underground body.

16. Transformer centre according to any of the previous claims, in which the cover is composed of at least two plates (7, 8).

17. Transformer centre according to claim 16, in which the external part (1) is placed on a first plate (8) of said plates, a second plate (7) of said plates being placed substantially above the transformer unit (21).

18. Transformer centre according to any of claims 16 and 17, in which a first plate (8) of said plates rests on the underground body (12), while a second plate (7) of said plates rests on the first of said plates (8) and on the underground body (12).

## Patentansprüche

1. Elektrisches Transformatorzentrum, das umfasst:
einen unterirdischen Teil (6), der einen unterirdischen Körper (12), der im Wesentlichen im Boden (25) vergraben ist, und wenigstens eine in dem unterirdischen Körper untergebrachte Transformatoreinheit (21) umfasst, wobei der unterirdische Körper eine Abdeckung (14) hat;
eine Vielzahl elektrischer Anlagen (18, 19), die zusammen mit dem Transformator (21) eine elektrische Installation des Transformatorzentrums bilden;
und
wenigstens einen externen Teil (1), der derart angeordnet ist, dass er sich über der Oberfläche des Bodens (25) erstreckt, wobei der externe Teil (1) mit einem inneren Teil des unterirdischen Körpers in Verbindung steht;
**dadurch gekennzeichnet, dass** der wenigstens eine externe Teil (1) als ein einteiliges Modul als ein Kasten aufgebaut ist, der ein Dach (2), Wände (3) und Türen (4, 5) für den Zugang zu dem Teil der elektrischen Anlagen (18, 19) umfasst, und wobei der wenigstens eine externe Teil (1) auf der Abdeckung (14) des unterirdischen Teils (6) angeordnet ist, so dass er einen Lüftungskamin für den unterirdischen Teil (6) bildet, der das Austreten von Luft aus dem unterirdischen Teil (6) zulässt, und wobei wenigstens ein Teil der elektrischen Anlagen (18, 19, 31) in dem wenigstens einen externen Teil (1) untergebracht ist, so dass der Zugang der Arbeiter zu den elektrischen Anlagen (18, 19, 31), die in dem externen Teil (1) untergebracht sind, vereinfacht wird, und wobei eine isolierende oder isolierte äquipotentiale bzw. isoelektrische Plattform (26) mit Drehscheibe bereitgestellt ist, so dass sie eine horizontale Position einnehmen kann, in der sie einen Arbeiter tragen kann, der Zugang zu den Anlagen im Inneren des externen Teils (1) haben möchte.

2. Transformatorzentrum nach Anspruch 1, wobei der Teil der elektrischen Anlagen, der in dem externen Teil (1) untergebracht ist, eine Niederspannungsbaugruppe (19) umfasst.

3. Transformatorzentrum nach einem der vorhergehenden Ansprüche, wobei der Teil der elektrischen Anlagen, der in dem externen Teil (1) untergebracht ist, Hilfssteuerungs- und/oder Kommunikationsanlagen (18) umfasst.

4. Transformatorzentrum nach einem der vorhergehenden Ansprüche, wobei der Teil der elektrischen Anlagen, der in dem externen Teil (1) untergebracht ist, Zellen (31) mit mittlerer Spannung umfasst.

5. Transformatorzentrum nach einem der vorhergehenden Ansprüche, in dem der externe Teil (1) mit wenigstens einem Lüftungsgitter (13) versehen ist.

6. Transformatorzentrum nach einem der vorhergehenden Ansprüche, wobei die Abdeckung (14) wenigstens eine Durchgangsöffnung (15; 27, 28) hat, über der der externe Teil (1) so angeordnet ist, dass die wenigstens eine Öffnung (15, 27, 28) den Durchgang von Kabeln und das Strömen von Luft und Gasen zwischen dem unterirdischen Teil (6) und dem externen Teil (1) zulässt.

7. Transformatorzentrum nach Anspruch 6, wobei der externe Teil (1) in eine Nut (29) um die Öffnung (15; 27, 28) in der Abdeckung (14) des unterirdischen Teils (6) herum passt.

8. Transformatorzentrum nach Anspruch 6, wobei die Abdeckung (14) eine Lippe (16) um die Öffnung (15; 27, 28) herum umfasst.

9. Transformatorzentrum nach Anspruch 8, wobei der externe Teil (1) über der Abdeckung angeordnet ist, so dass die Lippe (16) in eine Nut (23), die in der Unterseite des externen Teils (1) gefertigt ist, passt.

10. Transformatorzentrum nach einem der vorhergehenden Ansprüche, wobei der externe Teil (1) externe Zeichen bzw. Hinweistafeln umfasst, die Zwischenfälle in Bezug auf das Transformatorzentrum anzeigen.

11. Transformatorzentrum nach einem der vorhergehenden Ansprüche, wobei der externe Teil wenigstens ein Abteil umfasst.

12. Transformatorzentrum nach Anspruch 11, wobei der externe Teil (1) zwei Abteile umfasst, die durch eine Wand (17) getrennt sind, so dass ein erstes der Abteile einen Teil (19) der elektrischen Anlagen unterbringt und ein zweites der Abteile die Hilfsanlagen (18) unterbringt.

13. Transformatorzentrum nach einem der vorhergehenden Ansprüche, wobei die Abdeckung mit wenigstens einem Lüftungsturm (9) für das Ansaugen von Luft zu dem unterirdischen Teil (6) versehen ist.

14. Transformatorzentrum nach einem der vorhergehenden Ansprüche, wobei der unterirdische Körper (12) mit wenigstens einem Lüftungsloch (24) in den Wänden und/oder der Abdeckung des unterirdischen Körpers (12) versehen ist.

15. Transformatorzentrum nach einem der vorhergehenden Ansprüche, wobei die Abdeckung (14) in den unterirdischen Körper (12) passt, ohne sich seitlich von dem unterirdischen Körper zu erstrecken.

16. Transformatorzentrum nach einem der vorhergehenden Ansprüche, wobei die Abdeckung aus wenigstens zwei Platten (7, 8) zusammengesetzt ist.

17. Transformatorzentrum nach Anspruch 16, wobei der externe Teil (1) auf einer ersten Platte (8) der Platten angeordnet ist, wobei eine zweite Platte (7) der Platten im Wesentlichen über der Transformatoreinheit (21) angeordnet ist.

18. Transformatorzentrum nach einem der Ansprüche 16 und 17, wobei eine erste Platte (8) der Platten auf dem unterirdischen Körper (12) ruht, während eine zweite Platte (7) der Platten auf der ersten der Platten (8) und auf dem unterirdischen Körper (12) ruht.

## Revendications

1. Centre transformateur électrique, comprenant :
une partie en sous-sol (6) qui comprend un corps en sous-sol (12) sensiblement enterré dans le sol (25) et au moins une unité de transformateur (21) logée dans ledit corps en sous-sol, ledit corps en sous-sol ayant un couvercle (14) ;
une pluralité d'équipements électriques (18, 19) qui, ensemble avec le transformateur (21), constituent une installation électrique du centre transformateur ; et
au moins une partie externe (1) placée de telle manière qu'elle s'étend au-dessus de la surface du sol (25), la partie externe (1) étant en communication avec une partie interne du corps en sous-sol ;
**caractérisé en ce que** ladite au moins une partie externe (1) est configurée comme un module d'un seul tenant sous forme d'une cabine comprenant un toit (2), des parois (3) et des portes (4, 5) pour accéder à la partie de l'équipement électrique (18, 19), et dans lequel ladite au moins une partie externe (1) est située sur le couvercle (14) de la partie en sous-sol (6) de telle manière qu'elle constitue une cheminée de ventilation pour la partie en sous-sol (6), permettant la sortie d'air depuis ladite partie en sous-sol (6), et dans lequel au moins une partie de l'équipement électrique (18, 19, 31) est logée dans ladite au moins une partie externe (1), de sorte que l'accès aux opérateurs vers ledit équipement électrique (18, 19, 31) logé dans la partie externe (1) est simplifié, et dans lequel il est prévu une plate-forme équipotentielle (26) isolante ou isolée, qui pivote de telle manière qu'elle peut adopter une position horizontale dans laquelle elle peut supporter un opérateur qui désire accéder à l'équipement à l'intérieur de la partie externe (1).

2. Centre transformateur selon la revendication 1, dans lequel ladite partie de l'équipement électrique qui est logée dans ladite partie externe (1) comprend une carte à basse tension (19).

3. Centre transformateur selon l'une quelconque des revendications précédentes, dans lequel ladite partie de l'équipement électrique qui est logée dans ladite partie externe (1) comprend un équipement auxiliaire (18) de commande et/ou de communication.

4. Centre transformateur selon l'une quelconque des revendications précédentes, dans lequel ladite partie de l'équipement électrique qui est logée dans ladite partie externe (1) comprend des cellules (31) à tension moyenne.

5. Centre transformateur selon l'une quelconque des revendications précédentes, dans lequel la partie externe (1) est pourvue d'au moins une grille de ventilation (13).

6. Centre transformateur selon l'une quelconque des revendications précédentes, dans lequel le couvercle (14) comporte au moins un orifice traversant (15 ; 27, 28) au-dessus duquel est placée la partie externe (1) de telle sorte que ledit au moins un orifice (15, 27, 28) permet le passage de câbles et l'écoulement d'air et de gaz entre la partie en sous-sol (6) et la partie externe (1).

7. Centre transformateur selon la revendication 6, dans lequel la partie externe (1) s'engage dans une gorge (29) autour de l'orifice (15 ; 27, 28) dans le couvercle (14) de la partie en sous-sol (6).

8. Centre transformateur selon la revendication 6, dans lequel le couvercle (14) comprend une lèvre (16) autour de l'orifice (15 ; 27, 28).

9. Centre transformateur selon la revendication 8, dans lequel la partie externe (1) est placée au-dessus du couvercle de telle façon que la lèvre (16) s'engage dans une gorge (23) ménagée dans le fond de la partie externe (1).

10. Centre transformateur selon l'une quelconque des revendications précédentes, dans lequel la partie externe (1) comprend des signes externes indiquant des incidents en relation avec le centre transformateur.

11. Centre transformateur selon l'une quelconque des revendications précédentes, dans lequel la partie externe comprend au moins un compartiment.

12. Centre transformateur selon la revendication 11, dans lequel la partie externe (1) comprend deux compartiments séparés par une paroi (17), de sorte qu'un premier desdits compartiments loge une partie (19) de l'équipement électrique, et un second desdits compartiments loge l'équipement auxiliaire (18).

13. Centre transformateur selon l'une quelconque des revendications précédentes, dans lequel le couvercle est doté d'au moins une tourelle de ventilation (9) pour l'admission d'air vers la partie en sous-sol (6).

14. Centre transformateur selon l'une quelconque des revendications précédentes, dans lequel le corps en sous-sol (12) est doté d'au moins un évent (24) dans l'une au moins des parois ou dans le couvercle du corps en sous-sol (12).

15. Centre transformateur selon l'une quelconque des revendications précédentes, dans lequel le couvercle (14) s'engage dans le corps en sous-sol (12) sans s'étendre latéralement depuis ledit corps en sous-sol.

16. Centre transformateur selon l'une quelconque des revendications précédentes, dans lequel le couvercle est composé d'au moins quatre plaques (7, 8).

17. Centre transformateur selon la revendication 16, dans lequel la partie externe (1) est placée sur une première plaque (8) desdites plaques, une seconde plaque (7) desdites plaques étant placée sensiblement au-dessus de l'unité transformateur (21).

18. Centre transformateur selon l'une quelconque des revendications 16 et 17, dans lequel une première plaque (8) desdites plaques repose sur le corps en sous-sol (12), tandis qu'une seconde plaque (7) desdites plaques repose sur la première desdites plaques (8) et sur le corps en sous-sol (12).
